## Europäisches Patentamt

## European Patent Office

## Office européen des brevets

(19)

(11) Veröffentlichungsnummer: **0 214 187**
**B1**

(12) # EUROPÄISCHE PATENTSCHRIFT

(45) Veröffentlichungstag der Patentschrift:
**18.05.88**

(21) Anmeldenummer: **86901293.0**

(22) Anmeldetag: **19.02.86**

(86) Internationale Anmeldenummer:
**PCT/AT 86/00014**

(87) Internationale Veröffentlichungsnummer:
**WO 86/05235 (12.09.86 Gazette 86/20)**

(51) Int. Cl.⁴: **F 02 D 5/02**, F 02 M 65/00,
G 05 F 1/565

(54) SCHALTUNGSANORDNUNG ZUR ERFASSUNG VON STROMÄNDERUNGSSIGNALEN.

(30) Priorität: **06.03.85 DE 3508335**

(43) Veröffentlichungstag der Anmeldung:
**18.03.87 Patentblatt 87/12**

(45) Bekanntmachung des Hinweises auf die Patenterteilung:
**18.05.88 Patentblatt 88/20**

(84) Benannte Vertragsstaaten:
**AT CH DE FR GB IT LI LU NL SE**

(56) Entgegenhaltungen:
**DE-A-1 613 663**
**DE-A-3 242 317**

**Electronics, Band 47, Nr. 25, 12. Dezember 1974 T.E.
Skopal: "Voltage-regulated power supply delivers
constant current", Seite 126, siehe Seite 126; Figur**

(73) Patentinhaber: **VOEST- ALPINE AUTOMOTIVE
Gesellschaft mbh, Muldenstrasse 5, A-4020 Linz
(AT)**

(72) Erfinder: **SCHMIDT, Karl- Heinz, Stuwerstrasse 13,
A-1020 Wien (AT)**

(74) Vertreter: **Matschnig, Franz, Dipl.- Ing.,
Siebensterngasse 54 Postfach 452, A-1071 Wien
(AT)**

## Beschreibung

Die Erfindung bezieht sich auf eine Schaltungsanordnung zur Erfassung der Stromänderungssignale eines an einer konstanten Gleichspannung liegenden Nadelhubsensors einer Einspritzdüse für Brennkraftmaschinen.

Bei Brennkraftmaschinen mit Kraftstoffeinspritzung werden Einspritzventile verwendet, bei welchen eine Ventilnadel unter dem Druck des einzuspritzenden Kraftstoffes kurzzeitig und periodisch gegen die Kraft einer Feder bewegt wird und hiebei von ihrem Ventilsitz abhebt. Da für eine optimale Regelung die Kenntnis des genauen Einspritzzeitpunktes sowie der Einspritzdauer notwendig ist, sind Einspritzventile mit integrierten Nadelhubsensoren entwickelt worden, die, häufig auf magnetischem Weg unter Verwendung von Hallelementen, in Abhängigkeit von der Lage der Düsennadel ein Ausgangssignal liefert.

Bei einer im Handel erhältlichen Einspritzdüse dieser Art wird der Sensor mit einer konstanten Gleichspannung versorgt und bei Öffnen des Ventils tritt eine Stromänderung von etwa 10 % auf, die weniger als ein Milliampere beträgt. Bei üblichen Brennkraftmaschinen liegt die Dauer der Sensorimpulse etwa zwischen 0,5 und 15 ms, ihr Abstand liegt dabei zwischen etwa 50 und 250 ms. Wegen ihrer geringen relativen und absoluten Größe ist diese Stromänderung oft schwer erfaßbar, insbesondere wegen des in einem Kraftfahrzeug vorherrschenden hohen Störpegels. Auch führen bereits geringe Änderungen der Versorgungsspannung zu Stromänderungen, die fälschlicherweise als Impulse des Nadelhubsensors aufgefaßt werden können, wobei zu bedenken ist, daß das Tastverhältnis in dem weiten Bereich von etwa 0,2 bis 25 % liegen kann.

Aus der DE-A-3 242 317 ist ein Nadelhubsensor bekannt geworden, der von einer Konstant-Stromquelle gespeist wird. Der Nadelhubsensor arbeitet nach dem induktiven Prinzip, d.h. ein Verschieben der Düsennadel hat eine Änderung der Induktivität der Sensorspule zur Folge und dies wiederum erbringt eine Spannungsänderung an der Spule. Bedingt durch das Meßprinzip ist die Impulshöhe abhängig von der Drehzahl und aus diesem Grund wird eine Kompensation dieser Impulshöhenabhängigkeit versucht. Im Gegensatz zu der vorliegenden Erfindung liegt jedoch eine Strom- und keine Spannungsquelle vor und es wird kein Meßwiderstand verwendet, der zwischen dem Ausgang des Regelverstärkers der geregelten Spannungsquelle und dem Ausgang der Spannungsquelle liegt. Am Ausgang der bekannten Schaltung liegt ein Monoflop mit Schwellwertcharakter, was bedeutet, daß nur der Spritzbeginn der Düse erfaßt wird und Impulse konstanter Länge, unabhängig von der Öffnungszeit der Düsennadel, abgegeben werden. Es besteht somit auch keine Möglichkeit die Öffnungszeiten der Düsennadel zu messen.

Ziel einer aus der DE-A-1 613 663 bekannt gewordenen Schaltungsanordnung ist es, die Speisespannung eines über ein längeres Kabel angeschlossenen Verbrauchers konstant zu halten. Hiezu wird eine eigene Meldeleitung verwendet, um die am Verbraucher gemessene Spannung an das Regelgerät für die Speisespannung rückführen zu können.

Es ist ein Ziel der Erfindung, eine Schaltungsanordnung zu schaffen, welche unter den Bedingungen die in Kraftfahrzeugen vorherrschen mit geringem Aufwand eine sichere Erfassung solcher Stromänderungen ermöglicht.

Dieses Ziel läßt sich mit einer Schaltungsanordnung der eingangs genannten Art erreichen, bei welcher erfindungsgemäß der Sensor am geregelten Ausgang einer geregelten Gleichspannungsquelle liegt und zwischen dem Ausgang des Regelverstarkers und dem Ausgang der Gleichspannungsquelle ein Meßwiderstand geschaltet ist, der Ausgang des Regelverstarkers mit dem Eingang eines Wechselspannungsverstärkers mit Bandpaßcharakter verbunden ist und der Ausgang des Wechselspannungsverstärkers mit dem Eingang eines Schmitt-Triggers verbunden ist, dessen Ausgangssignal für die Änderungen des Sensorstromes repräsentativ ist.

Eine Schaltungsanordnung die eine besonders hohe Störsicherheit aufweist, zeichnet sich erfindungsgemäß dadurch aus, daß der Sensor an den Ausgangsklemmen einer geregelten Gleichspannungsquelle mit zwei symmetrisch arbeitenden Regelverstärkern liegt, zwischen den Ausgängen der Regelverstärker und den Ausgangsklemmen der Gleichspannungsquelle je ein Meßwiderstand geschaltet ist, die Ausgänge der Regelverstärker mit den Eingängen eines symmetrischen Wechselspannungsverstärkers mit Bandpaßcharakter verbunden sind und der Ausgang des Wechselspannungsverstärkers mit dem Eingang eines Schmitt-Triggers verbunden ist, dessen Ausgangssignal für die Änderungen des Sensorstromes repräsentativ ist.

Um auch über die Erdung der Schaltung einfließende Störungen weitgehend zu unterdrücken, empfiehlt es sich, wenn zwischen die je über einen Widerstand mit den Polen der Referenzspannung verbundenen Referenzspannungseingänge der beiden Regelverstärker ein Siebkondensator geschaltet ist.

Es hat sich auch als günstig herausgestellt, wenn der bzw. die Regelverstärker im Gegenkopplungszweig einen Kondensator zur Erzielung eines Tiefpaßcharakters aufweisen.

Im Sinne einer hohen Störfestigkeit ist es zweckmäßig, wenn die untere Grenzfrequenz des Wechselspannungsverstärkers zwischen 5 und 10 Hz und die obere Grenzfrequenz zwischen 15 und 30 kHz liegt.

Es ist weiters empfehlenswert, wenn die Regelzeitkonstante der geregelten

Gleichspannungsquelle unter 1 μs, vorzugsweise unter 0,5 μs, liegt.

Die Erfindung samt ihren weiteren Vorteilen ist im folgenden an Hand beispielsweiser Ausführungsformen nähet erläutert, die in der Zeichnung veranschaulicht sind. In dieser zeigen Fig. 1 ein Blockschaltbild der Schaltungsanordnung nach der Erfindung, Fig. 2 in einem Diagramm den zeitlichen Verlauf einiger Signale der Schaltung, Fig. 3 eine im Detail ausgeführte Schaltung, und Fig. 4 eine ähnliche Schaltung mit noch höherer Störfestigkeit.

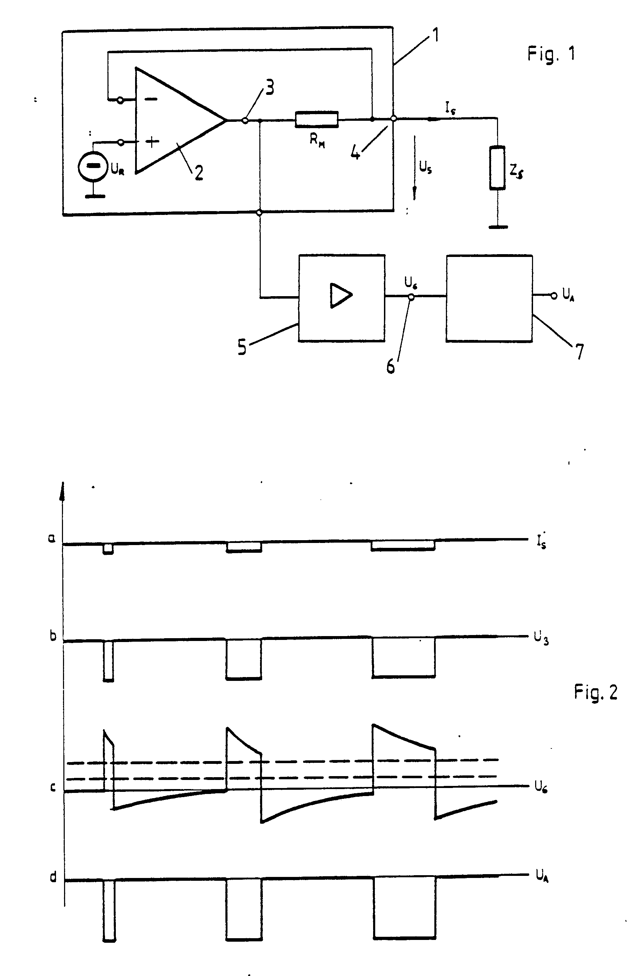

Gemäß Fig. 1 speist eine geregelte Gleichspannungsquelle 1 einen Nadelhubsensor $Z_s$ einer Einspritzdüse. Die Gleichspannungsquelle 1 weist einen Regelverstärker 2 auf, an dessen nicht invertierenden Eingang eine Referenzgleichspannung $U_R$ gelegt ist. Zwischen dem Ausgang 3 des Verstärkers 2 und dem Ausgang 4 der Gleichspannungsquelle 1 liegt ein Meßwiderstand $R_M$, wobei der Ausgang 4, an dem der Sensor $Z_s$ liegt, zur Bildung der Regelschleife mit dem invertierenden Eingang des Verstärkers 2 verbunden ist. Der Ausgang 3 des Regelverstärkers 2 ist mit dem Eingang eines Wechselspannungsverstärkers 5 verbunden, dessen Ausgang 6 wiederum mit dem Eingang eines Schmitt-Triggers 7 verbunden ist. An dem Ausgang des Schmitt-Triggers 7 tritt das gewünschte Ausgangssignal $U_A$ auf.

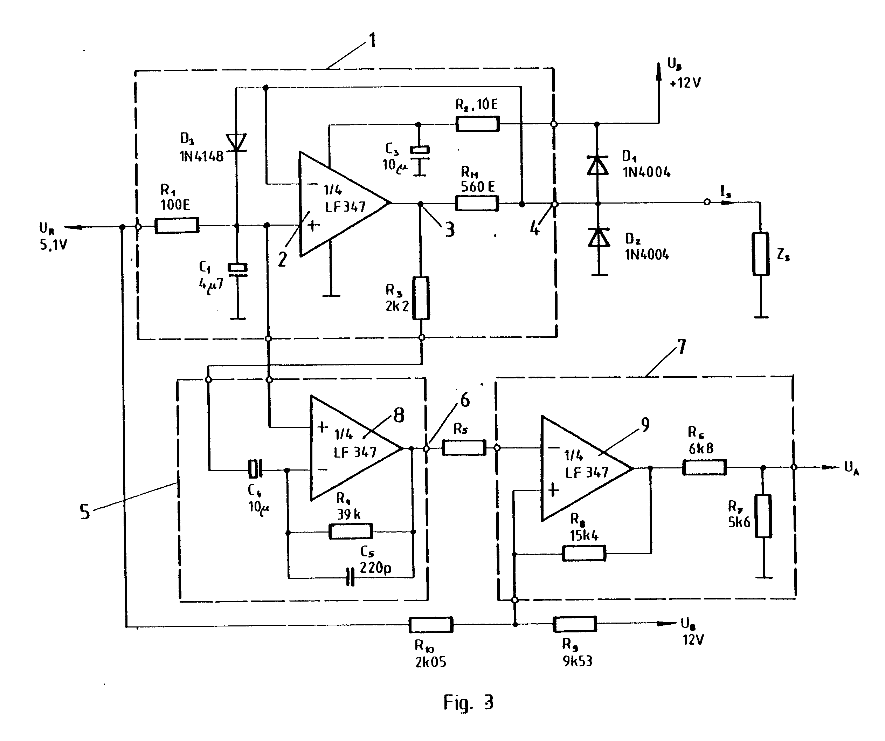

Die Schaltungsanordnung nach der Erfindung arbeitet folgendermaßen. Die Gleichspannungsquelle 1 sorgt am geregelten Ausgang 4 für eine konstante Spannung $U_s$ von z. B. 5 Volt, wobei ein Strom $I_s$, z. B. 4 mA, durch den Sensor $Z_s$ fließt. Bei Öffnen der Ventilnadel der Einspritzdüse sinkt der Strom $I_s$ geringfügig, z. B. um 400 μA, ab (siehe Diagramm a der Fig. 2). Da die Gleichspannungsquelle 1 eine kurze Regelzeitkonstante, bei einer Kapazität des Verbindungskabels zum Sensor von 500 pF typisch 0,5 μs oder kleiner, aufweist, wird die Spannung $U_s$ am Sensor $Z_s$ entsprechend rasch nachgeregelt; während des Sensorsignales sinkt jedoch die Spannung $U_3$ am Ausgang 3 des Regelverstärkers 2 ab, z. B. um 220 mV (Diagramm b der Fig. 2). Der Wechselspannungsverstärker 5 verstärkt diese Spannung wobei am Ausgang 6 dieses Verstärkers eine Spannung $U_6$ auftritt, die im Diagramm c der Fig. 2 dargestellt ist. Die Amplitude dieser Spannungsimpulse beträgt nun etwa 4 V. Die untere Grenzfrequenz des Verstärkers wird zwischen etwa 5 bis 10 Hz, im folgenden Schaltungsbeispiel (Fig. 3) 7 Hz, gewählt, um einerseits die erforderliche Gleichspannungstrennung zu erhalten und um andererseits zu vermeiden, daß langfristige Spannungsänderungen (Drift) als Nadelhubsignale Aufgefaßt werden. Die obere Grenzfrequenz wird mit etwa 15 bis 30 kHz gewählt, im folgenden Ausführungsbeispiel 13 kHz. Hiedurch sollen kurzfristige Störspitzen, die in Kraftfahrzeugen häufig auftreten, unterdrückt

werden.

Die Ausgangsspannung $U_6$ des Wechselspannungsverstärkers 5 ist dem Schmitt-Trigger 7 zugeführt, dessen Schaltschwellen so gelegt sind, daß auch bei den längsten vorkommenden Nadelhubsignalen die Signalflanken von $U_6$ sicher erfaßt werden. Dies ist dem Diagramm c der Fig. 2 entnehmbar, in dem die Schaltschwellen des Schmitt-Triggers 7 strichliert eingezeichnet sind. Am Ausgang des Schmitt-Triggers 7 tritt dann die Ausgangsspannung $U_A$ mit einer Amplitude von z. B. 5 Volt auf (siehe Diagramm d der Fig. 2). Die Spannung $U_A$ entspricht in ihrem zeitlichen Verlauf den Sensorsignalen und kann einer Regeleinheit zur Regelung und Steuerung der Brennkraftmaschine zugeführt werden.

In Fig. 3 ist eine unter Verwendung dreier identischer Operationsverstärker aufgebaute praktische Schaltungsanordnung gezeigt. Die geregelte Gleichspannungsquelle 1 enthält einen Operationsverstärker 2, dessem nicht invertierenden Eingang über ein Siebglied $R_1$, $C_1$ eine Referenzspannung $U_R$ zugeführt ist. Der Ausgang 3 des Operationsverstärkers ist über einen Meßwiderstand $R_M$ zu dem Ausgang 4 der Gleichspannungsquelle 1 geführt; zwischen diesem Ausgang 4 und Masse ist der Nadelhubsensor $Z_s$ geschaltet, wobei je eine Schutzdiode $D_1$, $D_2$ von diesem Ausgang 4 gegen Masse bzw. gegen die Betriebsspannung $U_B$ geschaltet ist. Weiters ist von dem Ausgang 4 eine Diode $D_3$ in Durchlaßrichtung zum nicht invertierenden Eingang des Verstärkers 2 geführt. Hiedurch wird bei Abschalten des Gerätes oder bei Ausfall der Referenzspannung eine Überspannung am Sensor vermieden. Die Betriebsspannung $U_B$ ist dem Verstärker 2 über ein Siebglied $R_2$, $C_3$ zugeführt. Zur Bildung der Regelschleife ist der Ausgang 3 des Verstärkers 2 mit dessen invertierendem Eingang verbunden.

Der Wechselspannungsverstärker 5 enthält ebenfalls einen Operationsverstärker 8, dessen nicht invertierender Eingang zur Festlegung des Arbeitspunktes an der Referenzspannung $U_R$ liegt. Über die Serienschaltung eines Widerstandes $R_3$ und eines Kondensators $C_4$ ist der nicht invertierende Eingang des Operationsverstärkers 8 mit dem Ausgang 3 des Verstärkers 2 verbunden. Im Gegenkopplungszweig des Operationsverstärkers 8 liegt ein Parallel-RC-Glied $R_4$, $C_5$.

Auch der Schmitt-Trigger 7 enthält einen Operationsverstärker 9, dessen invertierender Eingang über einen Widerstand $R_5$ mit dem Ausgang 6 des Wechselspannungsverstärkers 5 verbunden ist. Der Ausgang des Operationsverstärkers ist über einen Spannungsteiler $R_6$, $R_7$ gegen Masse geführt. An dem Spannungsteiler wird die Ausgangsspannung $U_A$ abgegriffen. Der Ausgang des Verstärkers 9 ist über einen Widerstand $R_8$ zu dem nicht invertierenden Eingang geführt. Dieser Eingang liegt weiters einerseits über einen

Widerstand $R_9$ an der Betriebsspannung $U_B$, andererseits über einen Widerstand $R_{10}$ an der Referenzspannung $U_R$. Der Arbeitspunkt des Verstärkers bzw. die Schaltschwellen des Schmitt-Triggers - bei der aus Fig. 3 ersichtlichen Dimensionierung +0,6 V bzw. +1,7 Volt - sind demnach durch die Spannungen $U_R$ und $U_B$ sowie durch die Widerstände $R_8$ bis $R_{10}$ festgelegt.

Es sei hier angemerkt, daß sich die im Zusammenhang mit dem Blockschaltbild nach Fig. 1 erwähnten Signalwerte auf die Dimensionierung nach Fig. 3 beziehen. Die Ausgangsspannung $U_A$ entspricht dem standardisiertem CMOS-Pegel und kann daher digital weiterverarbeitet werden.

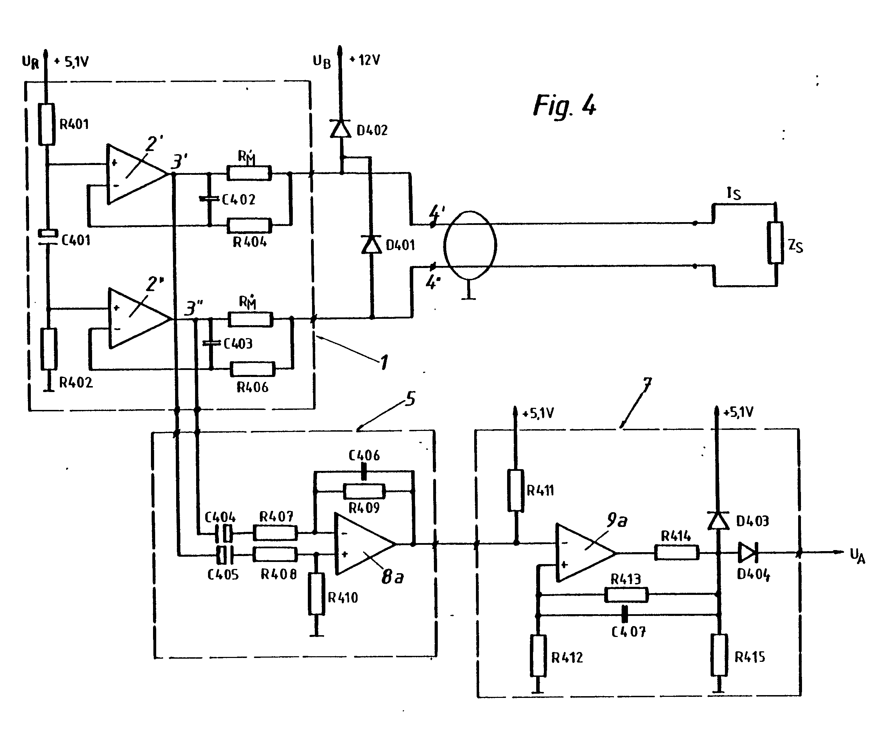

Die in Fig. 4 dargestellte Schaltung unterscheidet sich im Detail von der Schaltung nach Fig. 3 vor allem dadurch, daß die Gleichspannungsquelle 1 zwei symmetrisch arbeitende Regelverstärker 2', 2'' enthält und der Wechselspannungsverstärker 5 als Differenzverstärker ausgebildet ist.

Im einzelnen enthält die Gleichspannungsquelle 1 zwei Operationsverstärker 2', 2'', wobei der nicht invertierende Eingang des ersten Operationsverstärkers 2' über einen Widerstand $R_{401}$ an der Referenzspannung $U_R$ und der nicht invertierende Eingang dem zweiten Operationsverstärkers 2'' über einen Widerstand $R_{402}$ an Masse liegen. Zwischen die beiden erwähnten Eingänge ist ein Siebkondensator $C_{401}$ geschaltet. Durch diese symmetrische Siebung der Referenzspannung können verschiedene Störeinflüsse, die z. B. über die Erdung eingeschleift werden, eliminiert werden.

Die Ausgänge der Operationsverstärker 2', 2'' sind je über einen Meßwiderstand $R'_M$, $R''_M$ zu den Ausgangsklemmen 4', 4'' der Gleichspannungsquelle 1 geführt, an die über ein geschirmtes Kabel der Nadelhubsensor $Z_S$ geschaltet ist, wobei, ähnlich wie nach Fig. 3, zwei Schutzdioden $D_{401}$, $D_{402}$ an den Ausgangsklemmen liegen. Im Gegenkopplungszweig der Verstärker 2', 2'' liegen je ein. Kondensator $C_{402}$ bzw. $C_{403}$ und ein Widerstand $R_{404}$ bzw. $R_{406}$ um dem Verstärker Tiefpaßcharakter zur Ausfilterung höherfrequenter Störungen zu geben.

Der Wechselspannungsverstärker 5 enthält ennen Operationsverstärker 8a, der als Differenzverstärker arbeitet. Seine beiden Eingänge sind je über ein RC-Glied $C_{404}/R_{407}$ bzw. $C_{405}/R_{408}$ mit den Ausgängen 3', 3'' der Regelverstärker 2', 2'' verbunden. Der nicht invertierende Eingang liegt über einen Widerstand $R_{410}$ an Masse. Der Gegenkopplungszweig des Verstärkers besteht aus einem Parallel-RC-Glied $C_{406}/R_{409}$. Es ist ersichtlich, daß der Verstärker 5 dieses Ausbildungsbeispiels ebenso Bandpaßcharakter zeigt wie jener nach der vorhin beschriebenen Ausführung.

Der Schmitt-Trigger 7 enthält einen Operationsverstärker 9a, dessen invertierender Eingang mit dem Ausgang des Wechselspannungsverstärkers 5 verbunden ist. Der nicht invertierende Eingang liegt über einen Widerstand $R_{412}$ an Masse.

Der Ausgang des Operationsverstärkers ist über einen Spannungsteiler $R_{414}$, $R_{415}$ gegen Masse geführt. An dem Spannungsteiler wird über eine Diode $D_{404}$ die Ausgangsspannung $U_A$ abgenommen, wobei eine weitere Diode $D_{403}$ von dem Teilerpunkt gegen die Referenzspannung $U_R$ (5,1 V) führt. Der Teilerpunkt ist über einen Widerstand $R_{413}$ mit dem nicht invertierenden Eingang des Verstärkers 9a verbunden. Ein parallel geschalteter Kondensator $C_{407}$ dient zur Verbesserung der Flankensteilheit.

Die Dioden $D_{403}$, $D_{404}$ am Ausgang des Schmitt-Triggers bewirken folgendes: Die Diode $D_{403}$ klemmt die Ausgangsspannung auf den Wert $U_R$ + $U_D$ ( = Spannungsabfall an der Diodenstrecke), wobei hier anzumerken ist, daß alle Operationsverstärker mit einer Spannung $U_B$ (12 V) betrieben werden, die größer ist als $U_R$ (5,1 V). Die Diode $D_{404}$ kompensiert den Spannungsabfall an der Diode $D_{403}$ wieder, sodaß am Ausgang genau die Spannung $U_R$ bzw. die Spannung "Null" liegt.

Gegenüber der Schaltung nach Fig. 3 bietet die eben beschriebene Schaltung den Vorteil noch höherer Störfestigkeit. Diese wird einerseits durch die bereits erwähnte symmetrische, erdfreie Zuführung und Siebung der Referenzspannung in der Gleichspannungsquelle 1 erreicht und andererseits durch die symmetrische und erdfreie Zuführung der Gleichspannung an den Sensor $Z_S$. Gleichtaktig auftretende induktive Einstreuungen auf die Verbindungsleitung zwischen Sensor $Z_S$ und Gleichspannungsquelle 1 werden ebenso unterdrückt wie kapazitive Einstreuungen auf den Sensor.

Die erfindungsgemäße Schaltungsanordnung gewährleistet beim Einsatz in Kraftfahrzeugen trotz der dort auftretenden starken elektromagnetischen Störungen ein sicheres Erfassen der schwachen Stromsignale des Nadelhubsensors. Die Funktion der Schaltung bleibt bei Toleranzen des Nadelhubsignales bis etwa +/- 10 % unbeeinflußt. Anzumerken ist noch, daß die Erfindung auch für Nadelhubsensoren anwendbar ist, deren Strom sich bei Öffnen der Ventilnadel erhöht.

**Patentansprüche**

1. Schaltungsanordnung zur Erfassung der Stromänderungssignale eines an einer konstanten Gleichspannung liegenden Nadelhubsensors einer Einspritzdüse für Brennkraftmaschinen, dadurch gekennzeichnet, daß der Sensor ($Z_s$) am geregelten Ausgang (4) einer geregelten Gleichspannungsquelle (1) liegt und zwischen dem Augang (3) des Regelverstärkers (2) und dem Ausgang der Gleichspannungsquelle (1) ein Meßwiderstand ($R_M$) geschaltet ist, der Ausgang (3) des Regelverstärkers (2) mit dem Eingang eines Wechselspannungsverstärkers (5) mit Bandpaßcharakter verbunden ist und der Ausgang des Wechselspannungsverstärkers (5) mit dem Eingang eines Schmitt-Triggers (7) verbunden ist, dessen Ausgangssignal ($U_A$) für die Änderungen des Sensorstromes ($I_s$) repräsentativ ist.

2. Schaltungsanordnung zur Erfassung der Stromänderungssignale eines an einer konstanten Gleichspannung liegenden Nadelhubsensors einer Einspritzdüse für Brennkraftmaschinen, dadurch gekennzeichnet, daß der Sensor ($Z_s$) an den Ausgangsklemmen (4', 4'') einer geregelten Gleichspannungsquelle (1) mit zwei symmetrisch arbeitenden Regelverstärkers (2', 2'') liegt, zwischen den Ausgängen der Regelverstärker (2', 2'') und den Ausgangsklemmen (4', 4'') der Gleichspannungsquelle (1) je ein Meßwiderstand ($R'_M$, $R''_M$) geschaltet ist, die Ausgänge (3', 3'') der Regelverstärker (2', 2'') mit den Eingängen eines symmetrischen Wechselspannungsverstärkers (5) mit Bandpaßcharakter verbunden sind und der Ausgang des Wechselspannungsverstärkers (5) mit dem Eingang eines Schmitt-Triggers (7) verbunden ist, dessen Ausgangssignal ($U_A$) für die Änderungen des Sensorstromes ($I_s$) repräsentativ ist.

3. Schaltungsanordnung nach Anspruch 2, dadurch gekennzeichnet, daß zwischen die je über einen Widerstand (R 401, R 402) mit den Polen der Referenzspannung verbundenen Referenzspannungseingänge der beiden Regelverstärker (2', 2'') ein Siebkondensator (C 401) geschaltet ist.

4. Schaltungsanordnung nach einem der Ansprüche 1 bis 3, dadurch gekennzeichnet, daß der bzw. die Regelverstärker (2', 2'') im Gegenkopplungszweig einen Kondensator (C 402, C 403) zur Erzielung eines Tiefpaßcharakters aufweisen.

5. Schaltungsanordnung nach einem der Ansprüche 1 bis 4, dadurch gekennzeichnet, daß die untere Grenzfrequenz des Wechselspannungsverstärkers (5) zwischen 5 und 10 Hz und die obere Grenzfrequenz zwischen 15 und 30 kHz liegt.

6. Schaltungsanordnung nach einem der Ansprüche 1 bis 5, dadurch gekennzeichnet, daß die Regelkonstante der geregelten Gleichspannungsquelle (1) unter 1 µs, vorzugsweise unter 0,5 µs, liegt.

**Claims**

1. Circuit arrangement for detecting signals indicative of changes in current, said signals being generated by a needle lift sensor which is connected to a constant direct voltage and which is part of an injection nozzle for internal combustion engines, characterised in that the sensor ($Z_s$) is at the regulated output (4) of a regulated d.c. voltage source (1), a measuring resistance ($R_M$) is connected between the output (3) of the variable-gain amplifier (2) and the output of the d.c. voltage source (1), the output (3) of the variable-gain amplifier (2) is connected to the input of an a.c. voltage amplifier (5) of band-pass character, and the output of the a.c. voltage amplifier (5) is connected to the input of a Schmitt trigger (7) whose output signal ($U_A$) is representative of the changes in the sensor current ($I_s$).

2. Circuit arrangement for detecting signals indicative of changes in current, said signals being from a needle lift sensor which is connected to a constant direct voltage and which is part of an injection nozzle for internal combustion engines, characterised in that the sensor ($Z_s$) is connected to the output terminals (4', 4'') of a regulated d.c. voltage source (1) incorporating two symmetrically operating variable-gain amplifiers (2', 2''), respective measuring resistances ($R'_M$, $R''_M$) are connected between the outputs of the variable-gain amplifiers (2', 2'') and the output terminals (4', 4'') of the d.c. voltage source (1), the outputs (3', 3'') of the variable-gain amplifiers (2', 2'') are connected to the inputs of a symmetrical a.c. voltage amplifier (5) of band-pass character, and the output of the a.c. voltage amplifier (5) is connected to the input of a Schmitt trigger (7) whose output signal ($U_A$) is representative of the changes in the sensor current ($I_s$).

3. Circuit arrangement according to claim 2, characterised in that a filter capacitor (C 401) is connected between the reference voltage inputs of the two variable-gain amplifiers (2', 2''), said inputs being connected to the poles of the reference voltage each by way of a respective resistance (R 401, R 402).

4. Circuit arrangement according to one of claims 1 to 3, characterised in that the or each variable-gain amplifier (2', 2'') has a feedback loop which includes a capacitor (C 402, C 403) for achieving a low-pass character.

5. Circuit arrangement according to one of claims 1 to 4, characterised in that the lower limit frequency of the a.c. voltage amplifier (5) lies between 5 and 10 Hz and the upper limit frequency lies between 15 and 30 kHz.

6. Circuit arrangement according to one of claims 1 to 5, characterised in that the regulating constant of the regulated d.c. voltage source (1) is below 1 µs, preferably below 0.5 µs.

**Revendications**

1. Circuit destiné à saisir les signaux de variation de courant d'un capteur d'injecteur de moteurs à combustion interne, soumis à une tension continue constante, caractérisé par le fait que le capteur ($Z_s$) est disposé à la sortie (4) d'une source (1) de tension constante régulée et qu'entre la sortie (3) d'un amplificateur (2) de régulation et la sortie de la source (1) de tension constante est connectée une résistance de mesure ($R_M$), que la sortie (3) de l'amplificateur (2) de régulation est reliée à l'entrée d'un amplificateur (5) de tension alternative, comportant une caractéristique de filtre passe-bande et que la sortie de l'amplificateur (5) de tensian alternative est reliée à l'entrée d'un déclencheur de Schmitt (7) dont le signal de sortie ($U_A$) est représentatif des variations du courant du capteur ($I_s$).

2. Circuit destiné à saisir les signaux de variation de courant d'un capteur de course d'aiguille d'injecteur de moteurs à combustion interne, alimenté par une tension continue constante, caractérisée par le fait que le capteur ($Z_s$) est disposé aux bornes de sortie (4', 4'') d'une source (1) de tension continue régulée, comportant deux amplificateurs de régulation (2', 2'') travaillant symétriquement, qu'entre les sorties de l'amplificateur de régulation (2', 2'') et le bornes de sortie (4', 4'') de la source (1) de tension continue est branchée une résistance de mesure ($R'_M$, $R''_M$), que les sorties (3', 3'') de l'amplificateur de régulation (2', 2'') sont reliées aux entrées d'un amplificateur (5) de tension alternative symétrique, comportant une caractéristique de bande passante, et que la sortie de l'amplificateur (5) de tension alternative est reliée à l'entrée d'un déclencheur de Schmitt (7) dont le signal de sortie ($U_A$) est représentatif des variations de courant ($I_s$) du capteur.

3. Circuit selon la revendication 2, caractérisé par le fait qu'entre les entrées de tension de référence des deux amplificateurs de régulation (2', 2''), reliées chacune par une résistance (R 401, R 402) aux pôles de la tension de référence, est branché un condensateur de filtrage (C 401).

4. Circuit selon l'une quelconque des revendications 1 à 3, caractérisé par le fait que l'amplificateur de régulation ou les amplificateurs de régulation (2', 2'') comportent dans la branche de contre-réaction un condensateur (C 402, C 403) destiné à former une caractéristique passe-bas.

5. Circuit selon l'une quelconque des revendications 1 à 4, caractérisé par le fait que la fréquence limite inférieure de l'amplificateur (5) de tension alternative est situé entre 5 et 10 Hz et la fréquence limite supérieure entre 15 et 30 kHz.

6. Circuit selon l'une quelconque des revendications 1 à 5, caractérisé par le fait que la constante de régulation de la source de tension continue régulée (1), est située en dessous de 1 µsec, de préférence en dessous de 0,5 µsec.

Fig. 1

Fig. 2

Fig. 3

Fig. 4